# EUROPEAN PATENT APPLICATION

(11) **EP 2 246 789 A1**
(43) Date of publication of application: **03.11.2010**
(21) Application number: 10160029.4
(22) Date of filing: 15.04.2010
(51) Int. Cl.: G06F 11/36

(54) **Method and system for verifying a system operation**

(30) Priority: 27.04.2009 IN KO06702009
(71) Applicant: Siemens Aktiengesellschaft, 80333 München (DE)
(72) Inventor: Narayan, Chinmay, 560037 Bangalore (IN); Murthy, Prakriya Venkata Ramana, 560 094 Bangalore (IN); Thiyagarajan, Rajaram, 560 029 Bangalore (IN)

(57) **Abstract**

A method and system for verifying operation of an automated process in a computer system is disclosed. The method comprising of defining a set of sequences of at least two events expected during execution of the automated process, operating the computer system to execute the automated process, capturing the events produced during the execution of the automated process in the computer system, comparing execution trace of the events captured from the computer system against the expected trace of sequences of at least two expected events extracted during execution of the automated process, and verifying accuracy of operation of the automated process in the computer system based on the comparison. The sequence of events expected during execution of the automated process is modeled as an extended activity diagram, where the events represent a plurality of intermediate verification points of the automated process.

## Description

The present invention relates to a method and system for verification of the operations of an automated process in a system.

System testing checks if the behavior of an implemented system conforms to the specifications or expected behavior. System test as an abstraction usually concentrates on verification of the final output from the system. In certain cases, it is important to verify not only the final states but also the intermediate states of the system operation to verify the implementation with respect to specified system behavior. The verification of these intermediate states can be achieved by runtime verification to provide an opportunity to expose hidden problems that may require many additional test cases to reveal them.

Runtime verification detects faults in a system under scrutiny by observing its input/output behavior during its normal operations. But the major problem with automating runtime verification is the lack of a behavioral specification format that is easier to work with and expressive enough to specify the system behavior.

Various methods are implemented to specify system behavior requirements for run time verification. There are some attempts to use UML diagrams, mainly state machines, for the specification purpose. However, scalability problems could arise in practice with state modeling. Also, these approaches are difficult to extend further due to lack of complete context information. Moreover, these methods are highly formal and theoretical which makes it difficult to be followed by the industry-practitioners. Many a times, it is necessary to model the behavior of a system based on building blocks such as activities (or computations) and decisions using UML activity diagrams

The object of the invention is to improve the precision of runtime verification of operations in a system to detect faults in system behavior.

Conventionally, activity diagrams are used to detail the use cases and the internal system behavior. But activities specified in the behavioral model are abstract and it becomes difficult to be used for runtime verification. Also, the abstraction gap present in the specification and implementation is a major hurdle in the use of activity diagram for automatic runtime system verification.

These problems are solved by a method according to claim 1 and a system according to claim 10.

By defining the events based on the specification in an order, the activities happening at the intermediate stages of the automated process can be associated with events to verify if the execution trace of events of the test case is in conformance with the expected execution trace of expected events defined and reporting deviations if any, thereby improving the precision of runtime verification of the system operation.

The events refer to the activities happening at the intermediate points of a system operation and the execution trace refers to the occurrence of the events in a specified order.

According to an embodiment herein, the sequence of events expected during execution of the automated process is modeled using an extended activity diagram. This helps to bridge the gap between the levels of abstraction of the activities happening at the intermediate verification points in the system to enable runtime verification of system operation.

According to another embodiment, the comparison of execution trace of the events with the expected set of sequence of events is performed by a verification engine to determine the accuracy of operation the automated process in the system. Thereby, formally verifying if the specified activities are properly executed by the system as defined by the behavior specification provided through extended activity diagram.

The events represent a plurality of intermediate verification points of the automated process. The events help to obtain the activities happening inside the system during operation of an automated process.

According to yet another embodiment, the extended activity diagram defines a set of the events to publish state of activity of the automated process at the intermediate verification points, a set of attributes for verifying the system activity at the intermediate verification points and a set of guard conditions for checking execution of the events based on attributes of the events. This helps to reduce the overall development cycle and permits an interactive approach with use cases to address the system functionality.

The automated process is executed in the system using an input test case to produce the trace of events. This helps to identify what to look for in the execution trace of the system.

The verification engine uses the events and the assertions specified in the extended activity diagram to perform verification of the execution trace of events from the system. This helps to make a conclusion about the verdict of the test case.

The present invention is further described hereinafter with reference to illustrated embodiments shown in the accompanying drawings, in which:
- FIG 1: illustrates a block diagram depicting a process of runtime verification of operations of an automated process using a verification system according to an embodiment herein,
- FIG 2: illustrates a schematic diagram depicting an extended activity diagram in convergence with an embodiment herein,
- FIG 3: illustrates a schematic diagram depicting a verification engine in convergence with an embodiment herein,
- FIG 4: illustrates an exemplary depiction of an extended activity diagram showing the workflow for a use case Request Order, according to an embodiment herein,
- FIG 5: illustrates an exemplary depiction of runtime verification of a test case of fetching of
- FIG 6: publication documents from web, according to an embodiment herein, and illustrates a flow diagram depicting a method of runtime verification of system operations using an extended activity diagram, according to an embodiment herein.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

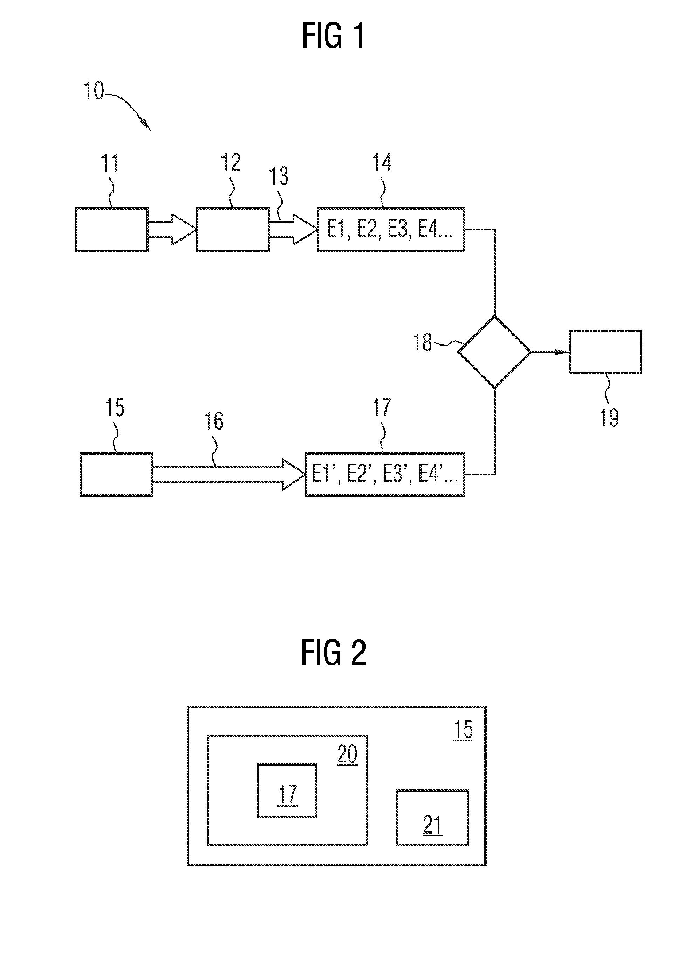

FIG 1 illustrates a block diagram depicting a process of runtime verification of operations of an automated process using a verification system according to an embodiment herein. The system 10 behavior is modeled in the form of an extended activity diagram 15 during the implementation stage. The extended activity diagram 15 defines a set of sequences comprising of at least two events 17 expected during execution of an automated process for the scenario considered. Here the expected sequences of events 17 are defined as E'1, E'2, E'3,..., E'n. The computer system 12 under test is executed with an input test case 11 for verifying the computer system 12 behavior. The execution phase of the input test case 11 produces a set of events 14. The events 14 obtained during execution of test scenario can be outlined as E1, E2, E3, ..., En. The execution trace 13 of events 14 published from the computer system 12 under test is compared against the expected execution trace 16 of sequences of expected events 17 extracted during execution of the automated process corresponding to the behavior scenario represented in the form of extended activity diagram 15. Further, the accuracy of the operation of the automated process in the computer system 12 under test is verified based on this comparison. The comparison and verification of the automated process in the computer system 12 under test is performed by a verification engine 18.

The extended activity diagram 15 specifies the behavioral model of a computer system 12 operation. In the extended activity diagram 15, the user need to define specific events 17 required for publishing the activities happening at the intermediate points of the automated process during the system operation, the verification of internal activity states, and a set of guard conditions 21 (see FIG 2) based on the attributes of the events 17. The verification of internal activity states are based on the attributes of the expected events 17 outlined in the form of assertions. This helps to verify the activities happening between the input and output stage of a specific action to easily identify if there is any deviation of the system 10 behavior at intermediate stages. These events 17 are necessary to enable runtime verification of the state of the activity in the activity nodes of the computer system 12. The guard conditions dictate the terms of transition from one activity state to another. The abstraction of system specification in the form of expected events 17 isolates it from changes in the implementation of the system 10. The events 17 can further be qualified with data, which helps in detailed verification of the system behavior.

The verification engine 18 takes the computer system 12 behavior in the form of extended activity diagram 15 for the corresponding input test case 11. The verification engine 18 analyses the extended activity diagram 15 and extracts the expected execution trace 16 and the sequence of expected events 17 published along these execution paths. Further, the events 14 E1, E2, E3, ..., En published from the computer system 12 under test during the execution of the test case 11 are captured by the verification engine 18. On reception of the events 14 from the system 10 under test, the verification engine 18 compares the execution trace 13 of events E1, E2, E3, ..., En with the expected execution trace 16 of expected sequence of events E'1, E'2, E'3, ..., E'n extracted from the extended activity diagram 15. If the execution trace 13 of events E1, E2, E3, ..., En does not represent any complete path from the extended activity diagram 15, then a deviation in the computer system 12 behavior is reported in the form of a test case 11 result 19. This deviation in computer system 12 behavior leads to detecting the cause of the problem.

Verification engine 18 utilizes the expected events 17 and assertions specified in the extended activity diagram 15 for verification of the execution trace 13 of the test case 11. After the verification of the execution traces 13 and 16, the verification engine 18 yields a result 19 for the test case 11 considered. The result 19 can be test case pass or fail with an observation, test case 11 passed following the path defined in extended activity diagram 15, test case passed not following the path defined in extended activity diagram 15 or test case failed. The cause for deviation in the execution traces 13 and 16 and the difference in computer system 12 behavior can be attained by trouble shooting problem.

The extended activity diagrams 15 are developed during the analysis and design phase of the software development. The computer system 12 under test needs to implement and publish the expected events 17 mentioned in the extended activity diagram 15. The event publishing mechanism can be introduced into the verification system 10 by a modeler during implementation by hand-weaving the event publishing code into the system 10 or by using similar aspects to weave code into the system 10.

If the expected execution trace 16 consists of a repetition of a subsequence of events 17, then the cycle is easily identifiable. The modelers should then introduce corresponding cycle or loop in the extended activity diagram 15 for suitable verification. The verification engine 18 in this case can be an event sequence comparator or any suitable comparator capable of performing a similar function.

FIG 2 illustrates a schematic diagram depicting an extended activity diagram 15 in accordance with an embodiment herein. The extended activity diagram 15 includes an activity module 20, a sequence of expected events 17, and a set of guard conditions 21. The activity module 20 captures a plurality of intermediate activities happening inside the system 10. The expected events 17 are introduced in the activity module 20 to publish the state of activity at the activity nodes. The set of events 17 represent the intermediate verification points of an automated process being operated in the system 10. The events 17 are to be published such that it can enable runtime verification of the activities happening in the system 10. The internal activity states are verified based on the attributes of the events 17 in the form of assertions. For example, an attribute for an event connectrequest can be specified as Assert (connectrequest.status == success). The set of guard conditions 21 are brought in the extended activity diagram 15 based on the attributes of the events 17. These guard conditions 21 dictate the terms of the transition from one activity state to another. This helps to decrease the number of predetermined activity states in the automated process, thereby simplifying the event 17 specification.

The extended activity diagram 15 bridges the abstraction gap of events produced in activity modules 20 representing system behavior and the corresponding software implementation. The activity modules 20 are annotated with expected events 17 by the modeler during its creation or after creation. The expected events 17 introduced by the modeler indicate completion of activities of a particular scenario viewed. The program is instrumented by the modeler during the implementation phase using the expected events 17 specified in the activity module 20 to indicate completion of activities at preferred intermediate points.

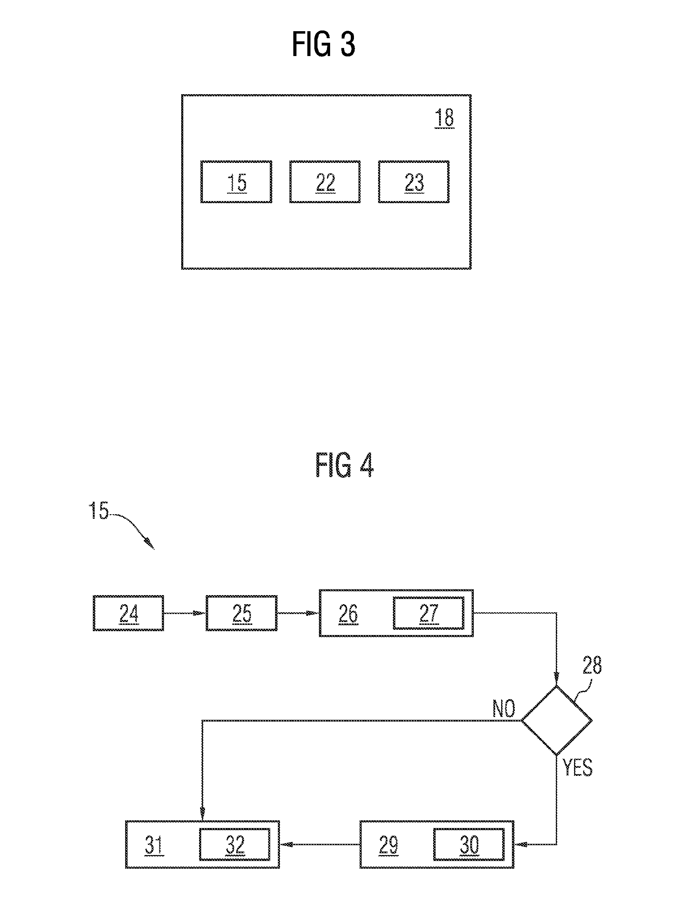

FIG 3 illustrates a schematic diagram depicting a verification engine 18 in convergence with an embodiment herein. The verification engine 18 takes the system 10 behavior for a test case 11 in the form of an extended activity diagram 15. The extended activity diagram 15 defines the behavior of the expected execution trace 16 and corresponding sequence of expected events 17 published along the execution paths. The verification engine 18 extracts the expected sequence of events 17 for the test case 11 in use from the extended activity diagram 15.

On execution of the test case 11 in the computer system 12 under test, the verification engine 18 captures the events 14 published from the computer system 12 using adapters 22. The events 14 are produced based on an event publishing code provided into the computer system 12. The adapters 22 can be extended to capture the events depending on the way the events are published. Further, the verification engine 18 includes a comparator 23 to compare the execution trace 13 with the expected execution trace 16 of sequence of expected events 17 extracted from the extended activity diagram 15. If the execution trace 13 of events 14 from the computer system 12 under test does not represent any complete path from the extended activity diagram 15, then the comparator 23 reports a deviation in the computer system behavior. The observed deviation in the computer system 12 behavior will give lead in detecting the cause of the problem.

Verification engine 18 uses the expected events 17 and assertions specified in the extended activity diagram 15 to perform the verification of the execution path. After the verification of the execution traces 13, 16, the test case 11 execution result 19 can be classified as either test case 11 pass or test case fail with the remarks test case passed following the path defined in activity model, test case passed not following the path defined in activity model or test case failed. Trouble shooting the problem aids to resolve the deviation of computer system 12 behavior for the scenario studied.

FIG 4 illustrates an exemplary depiction of an extended activity diagram showing the work flow for a use case Request Order, according to an embodiment herein. Generally, the expected events 17 include attributes relating to input and output of a specific action. In the example of FIG 4, the extended activity diagram 15 shows a sequence of activity states for Request Order workflow 24. The workflow 24 starts with an activity Receive Order 25 followed by the activity Verify Stocks 26. The activity Verify Stocks 26 generates an Accept Order event 27. The Accept Order event 27 can have attributes like Order Volume, Stocks in Store, Result Status or the like. The transition from the activity Verify Stocks 26 to the activity Ship Order 29 is attended by the guard condition 28 for Accept Order event 26 status true. The activity Ship Order 29 may have events 30 such as receive payment, verify payment etc. On completion of the activity Ship Order 29, the activity transits to the activity Close Order 31, where an Order Closed event 32 is indicates the termination of the work flow 24. The alternative path from activity Verify Stocks 28 to the activity Close Order 31 is assisted by a guard condition 28 status false for the event Accept Order 26.

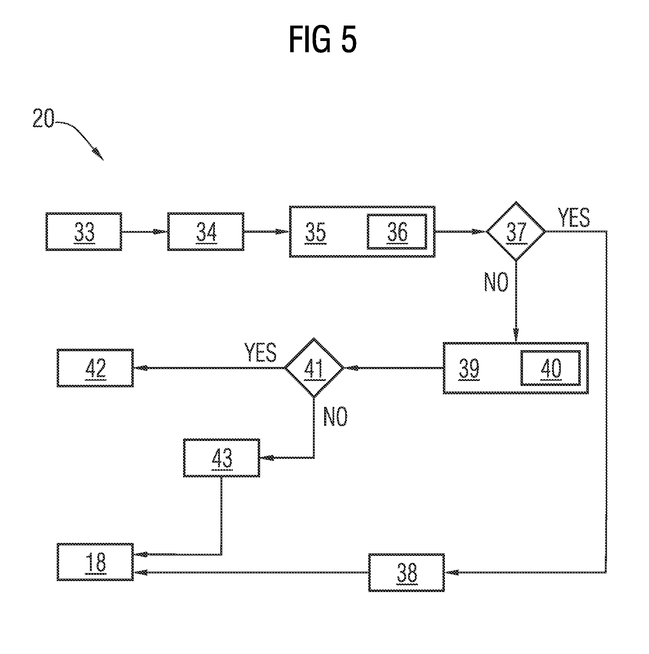

FIG 5 illustrates an exemplary depiction of a runtime verification of a test case 33 of fetching of publication documents from web according to an embodiment herein. In the example of FIG 5, an activity module 20 for a system use case 34 request for publication document is considered. A web based repository system (not shown) allows users to fetch the publication documents for the repository server. For performance reasons, there is a provision of some intermediate cache servers that should be checked first for the availability of the required document. A test case 33 that tests the use case 34 of fetching of the publication document from web can succeed irrespective of whether it is fetched from the intermediate cache or the destination server. Here, not only the end result (successful fetching of document) but also the intermediate path taken to achieve it, (hit to the cache server and then main server, in case of miss) is important as it impacts the non-functional requirement performance. This is important for the system to verify the location from where the test case 33 fetched the data. The path to fetch the required information is an important factor in deciding the correctness of the implemented behavior.

The activity module 20 cited in FIG 5 represents a system use case 34 Request for document showing the sequence of actions and events occurring inside the activity module 20. The activity Search in Cache 35 generates a Cache Hit event 36. The Cache Hit event 36 determines the next action to be executed and captures this as a guard condition 37 for state transition. The transition from Search in Cache 35 to the activity Fetch from Cache 38 is attended by the of a guard condition 37 for the Cache Hit event 36 status true. If the status of the event Cache Hit 36 as decided by the guard condition 37 is false, then an activity Search in Repository 39 is generated. The activity Search in Repository 39 in turn creates a so-called reposearch event 40. If the status of guard condition 41 for the Repo Search event 40 is true, then the execution trace indicates the activity fetch from repo 42 where the system directly fetches the document from the repository. The guard condition 41 for the Repo Search event 40 is false, and then the activity Search in Repository 39 sends an error report 43 to the verification engine 18.

The verification engine 18 uses the activity module 20 to find the execution path and further matches the event Repo Search 40 from the execution trace with the first event specified in the execution path defined in the extended activity diagram 15. Here the first expected event is cache hit 36, which indicates a mismatch between the event trace during the execution and the flow specified in the extended activity diagram 15. This deviation is reported to the event sequence comparator 23.

In a case, if the status of the guard condition 37 for the Cache Hit event 36 is false and the status of the guard condition 41 for Repo Search event 40 is true, then the verification engine 18 checks if the event trace 14 follows a path defined in the extended activity diagram 15 where the Repo Search event 40 occurs after the guard condition status is false. This indicates that the computer system 12 first searched for the document in the cache and then moved to search the repository to fetch the document, as the document was not present in cache.

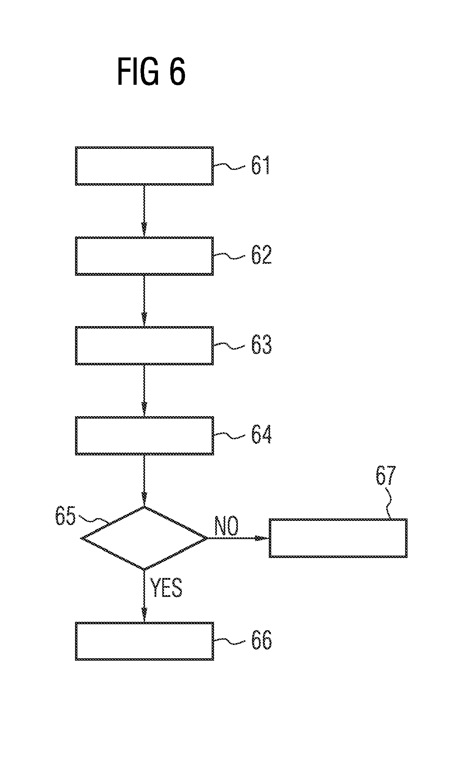

FIG 6 illustrates a flow diagram depicting a method of runtime verification of a system operation using an extended activity diagram 15, according to an embodiment herein. A set of sequences of events 17 expected during the execution of an automated process is defined in the form of an extended activity diagram 15 in step 61. A computer system 12 under test is then operated to execute the automated process, which is a test case 11, for extracting an execution trace 13 of the events 14 according to step 62. In step 63, the events 14 produced during the execution of the test case 11 are captured from the computer system 12. Further, the execution trace of events 13 published from the computer system 12 is compared against the expected set of sequences of at least two events 17 extracted using the extended activity diagram 15 according to step 64. In step 65, a check is performed to verify the execution path of the computer system 12 operation. If the execution trace 13 of events 14 from the computer system 12 under test differs from the expected execution trace 16 of expected events 17 defined using the extended activity diagram 18, then a deviation in computer system 12 behavior is reported in step 66. If the execution traces 13, 16 matches each other, there is no deviation is computer system 12 behavior according to step 67.

On completion of the verification of the execution traces 13, 16, then the test case 11 execution results can be listed as test case 11 passed, following the path defined in extended activity diagram 18, test case 11 passed not following the path defined in the extended activity diagram 18 and the test case 11 failed.

The implementation of the embodiment herein can be realized by modeling an activity diagram using event specification, event capturing, and event comparison. At the time of creation of the extended activity diagram or before, the modeler creates a list of events indicating completion of activities or decisions made. The modeler annotates the activity model with events at logical points in the model with events drawn from the above list of events, thereby extending the diagram. Event capturing is then implemented using popular publish-subscribe or subject -observer patterns. Here the program acts as source of events to which the external event comparator subscribes to. Further, the event comparison can be performed by realizing the following steps. The inputs for program execution are chosen based on a path in the extended activity diagram, recording the sequence of events emitted during program execution, collection of sequence of events from the chosen path in the extended diagram, comparing the event sequences obtained, and detecting point of deviations of the implementation from the specification, if a particular event obtained from the system under test does not agree with the corresponding event in the extended activity diagram. The deviation could be due to problems in the system behavior or in the model specification.

The embodiments herein increases the reliability of computer system testing through runtime verification, detects bugs in computer system testing before it reaches the customer and monitoring the non functional issues like redundancy, efficiency etc using the events generated.

The embodiment herein can be extensively used in areas where considerable business logic is present in the back end and whose actions may affect overall system functionality but not necessarily the output of the current operation. For instance, Hospital management systems which have considerable business logic can use this for run-time system verification. Further, the exact point of deviation from the expected behavior of a process being executed in a system can be identified.

The elements of the embodiment herein are implemented using software programming or software elements with any programming or scripting languages such as C, C++, Java, or the like with the various algorithms being implemented with any combination of data structures, objects, processes, routines or other programming elements.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method of verifying operation of an automated process in a computer system (12), said method comprising steps of:
- defining a set of sequences of at least two events (17) expected during execution of said automated process;
- operating said computer system (12) to execute said automated process;
- capturing said events (14) produced during the execution of said automated process in said computer system (12);
- comparing execution trace (13) of said events (14) captured from said computer system (12) against said expected execution trace (16) of said expected set of sequences of at least two events (17) extracted during execution of said automated process; and
- verifying accuracy of operation of said automated process in said computer system (12) based on said comparison.

2. The method according to claim 1, wherein said sequences of at least two events (17) expected during execution of said automated process is modeled as an extended activity diagram (15).

3. The method according to claim 1, wherein said comparison of execution trace (13) of said events (14) with said expected set of sequence of at least two events (17) is performed by a verification engine (18) to verify accuracy of operation said automated process in said computer system (12).

4. The method according to one of the claims 1 to 3, wherein said events (13,16) represents a plurality of intermediate verification points of said automated process.

5. The method according to one of the claims 2 to 4, wherein said extended activity diagram (15) defines:
- a set of said expected events (17) to publish state of activity of said automated process at said intermediate verification points;
- a set of attributes for verifying said computer system (12) activity at said intermediate verification points; and
- a set of guard conditions (21) for checking execution of said events (14) based on attributes of said expected events (17).

6. The method according to one of the claims 1 to 5, wherein said automated process is executed in said computer system (12) using an input test case (11) to produce said trace of events (14).

7. The method according to one of the claims 1 to 6, wherein said verification engine (18) uses said expected events (17) and said assertions specified in said extended activity diagram (15) to perform verification of said execution trace (13) of said events (14) from said computer system (12).

8. A system (10) for verifying operation of an automated process in a computer system (12), said verification system (10) comprising of:
- a module (20) for defining a set of sequences of at least two events (17)expected during execution of said automated process;
- an operating means to execute said automated process in said computer system (12);
- an adapter (22) to capture said events (14) published during the execution of said automated process;
- a verification engine (18) to compare execution trace (13) of said events (14) published from said computer system (12) against said expected events (17) extracted during execution of said automated process; and
- said verification engine (18) verifying accuracy of operation of said automated process in said computer system (12) based on said comparison.

9. The system (10) according to claim 8, wherein said module (20) defining said sequences of at least two events (17) expected during execution of said automated process is modeled as an extended activity diagram (15).

10. The system (10) according to claim 9, wherein said extended activity diagram (15) defines:
- a set of said expected events (17) to publish state of activity of said automated process at said intermediate verification points;
- a set of attributes for verifying said system (10) activity at said intermediate verification points; and
- a set of guard conditions (21) for checking execution of said events (14) based on attributes of said expected events (17).

11. The system (10) according to claim 10, wherein said guard conditions (21) indicates the transition of said automated process from one activity state to another.

12. The system (10) according to claim 10 or 11, wherein said attributes of said expected events (17) are patterned in the form of assertions.

13. The system (10) according to one of the claims 8 to 12, wherein said events (14, 17) represent a plurality of intermediate verification points of said automated process.

14. The system (10) according to one of the claims 8 to 13, wherein said automated process is executed in said computer system (12) using an input test case (11) to produce said trace of events (14).

15. The system (10) according to one of the claims 8 to 14, wherein said verification engine (18) uses said expected events (17) and said assertions specified in said extended activity diagram (15) to perform verification of said execution trace (13) of said events (14) from said computer system (12).
